# DEMANDE DE BREVET EUROPEEN

(11) **EP 4 079 462 A1**
(43) Date de publication de la demande: **26.10.2022**
(21) Numéro de dépôt: 21169223.1
(22) Date de dépôt: 19.04.2021
(51) Int. Cl.: B25J 9/16, B25J 11/00, B27M 3/18

(54) **PROCEDE ET DISPOSITIF AUTOMATISE POUR L'ASSEMBLAGE DE MEUBLES**

(71) Demandeur: Schmidt Groupe, 68660 Liepvre (FR)
(72) Inventeur: OFFNER, Olivier, 67730 LA VANCELLE VILLAGE (FR)
(74) Mandataire: Rhein, Alain

(57) **Abrégé**

Procédé et unité d'assemblage de caisson de meuble.

L'invention concerne un procédé et une unité d'assemblage de caisson de meuble comportant un côté inférieur (2), au moins deux parois intermédiaires (3, 4, 5) et un côté supérieur (6).

Plus particulièrement selon le procédé :
• On amène le côté inférieur (2) sur un plan de montage (15) dans un plan repère de positionnement (18) ;
• On emboite dans une disposition verticale lesdites parois intermédiaires (3, 4, 5) sur le côté inférieur (2) ;
• On assure le maintien dans une disposition verticale des dites parois intermédiaires (3, 4, 5) ;
• On prélève, depuis une zone d'alimentation (23), un côté supérieur (6), au moyen d'un bras préhenseur de robot (24) ;
• On emboite au travers des moyens d'emboitement réciproque (7) le côté supérieur (6) sur les parois intermédiaires (3, 4, 5) en exerçant sur ledit côté supérieur (6) une pression d'emboitement sensiblement dans l'alignement de la résultante (25) des forces de résistance à l'emboitement (26) procurées par lesdites moyens d'emboitement réciproque (7).
Figure pour l'abrégé : Fig. 3

## Description

La présente invention concerne un procédé et une unité d'assemblage pour caisson de meuble.

La présente invention a trait au domaine de la fabrication, à échelle industrielle de meubles, tels que les meubles de cuisine, placard ou autre.

Dans le cadre de la fabrication industrialisée de meubles de cuisine ou similaire, on fait appel à des panneaux à base de bois qui sont débités dans un premier temps, pour concevoir différentes parois conçues pour définir des caissons de meuble une fois assemblées.

Aussi, dans une unité de fabrication de meubles, on conçoit une large gamme de parois de toutes dimensions pour la conception de caissons de meubles de taille et aux caractéristiques variées.

S'il est possible d'imaginer que dans une telle unité de fabrication on dispose autant de lignes de d'assemblage que de tailles de caissons différentes à concevoir, il est beaucoup plus fréquent qu'une même ligne soit conçue pour permettre l'assemblage de caissons de meubles répondant à des plages de dimensions définies.

Ainsi, il est habituel qu'au travers d'un nombre limité de lignes d'assemblage il est couvert 80 à 90 % de la production au travers de la conception de caissons de meubles aux dimensions et caractéristiques les plus courantes.

Finalement, dans une telle unité de fabrication industrielle de meubles se pose, habituellement, la difficulté de concevoir une grande variété de caissons de meubles qui se distinguent au travers de leurs dimensions et/ou caractéristiques particulières, tout en ne représentant que cette part réduite, comprise entre 10 et 20% de la production globale.

Il est économiquement peu rentable d'équiper une telle unité de fabrication de lignes d'assemblage adaptées pour la conception de chacune de ces variétés de caissons de meuble spécifiques et la solution la plus fréquemment mise en œuvre consiste à concevoir ces caissons, correspondant à des gammes de production particulière, sur des unités d'assemblage plus adaptées à des productions en petite série. Souvent, ces unités d'assemblage comportent moins d'automatismes et plus intervention manuelle.

À noter, par ailleurs, qu'une ligne d'assemblage automatisée, conçue pour la conception de caissons de tailles définies, intègre des postes d'assemblage qui, présentant nécessairement des spécificités adaptées à ces caissons à assembler, doivent être considérés comme des machines spéciales. Elles sont donc conçues à la demande et un besoin exprimé au niveau d'une unité de fabrication de meubles ne peut être satisfait qu'au-delà d'un laps de temps inhérent à la conception et à la fabrication de telles machines spéciales.

On a observé, par ailleurs, que ce besoin de meubles aux caractéristiques et dimensions particulières est grandissant ces dernières années. En somme, à côté des meubles aux caractéristiques les plus fréquentes et correspondant à la production la plus importante, la gamme de meubles spécifiques, produits en séries réduites, tant à croitre, augmentant le besoin en unités d'assemblable particulières.

Pour rappel, une unité d'assemblage automatisée de caissons de meubles comporte, généralement, un convoyeur d'alimentation d'un côté inférieur sur lequel sont emboîtées verticalement, soit manuellement, soit au moyen de préhenseurs mécaniques adaptés, au moins deux parois intermédiaires. Sur ces dernières, parfaitement maintenues sur l'unité d'assemblage, est emboîtée un côté supérieur. Celui-ci est prélevé depuis un poste d'alimentation par un plateau de préhension pour, souvent après retournement, le positionner de manière ajustée au-dessus des parois intermédiaires et réaliser l'assemblage.

De manière usuelle, le côté inférieur, les parois intermédiaires et le côté supérieur comportent des perçages dont certains reçoivent des tourillons destinés à venir s'insérer dans des perçages ménagés en adéquation sur une paroi adjacente lors de ces opérations d'assemblage. Très souvent, avant ces opérations d'assemblage ces perçages prévus pour accueillir ces tourillons sont garnis de colle.

Le plus fréquemment, ce sont les parois intermédiaires qui sont pourvues en amont de tourillons se présentant en partie saillants au niveau de leurs bordures d'extrémité destinée à coopérer, d'une part, avec le côté inférieur et, d'autre part, avec le côté supérieur.

On comprend que si les préhenseurs mécaniques amenant et emboîtant les parois intermédiaires sur le côté inférieur ont pour but, individuellement, de faire coïncider les tourillons en bordure d'extrémité inférieure de ces parois intermédiaires avec les perçages dans ce côté inférieur, le plateau de préhension prélevant le côté supérieur pour le positionner et l'emboîter sur les parois intermédiaires doit faire coïncider chacun des tourillons en bordure d'extrémité supérieure de ces parois intermédiaires avec des perçages dans le côté supérieur, puis exercer une pression d'assemblage pour qu'intervienne l'emboîtement.

Le guidage périphérique du plateau de préhension permet d'assurer un assemblage uniforme du côté supérieur sur les parois intermédiaires au travers du contrôle du déplacement vertical de ce plateau de préhension sensiblement uniforme sur toute sa surface. En somme, la cote verticale d'assemblage du côté supérieur sur les parois intermédiaires préassemblées sur le côté inférieur est une donnée que comporte en mémoire l'unité d'assemblage. Le caisson de meuble est donc considéré assemblé une fois cette cote verticale d'assemblage atteinte, le cas échéant en fonction d'une tolérance déterminée, au travers de moyens de détection adaptée de la position du plateau de préhension. A l'inverse un défaut d'assemblage peut être détecté par une cote verticale d'assemblage non atteinte par le plateau de préhension.

De telles unités d'assemblage sont complétées habituellement par un poste de pressage, souvent dénommée cadreuse de pressage, que gagne le caisson de meuble après assemblage dans les conditions précédemment décrites. Dans cette cadreuse les différentes parois sont maintenues et pressées les unes contre les autres, action ayant pour conséquence de parfaire l'engagement des tourillons dans leurs perçages et de conformer définitivement en dimension le caisson de meuble.

Il est certain que ce type d'unité d'assemblage de caissons de meubles connue, capable d'assurer l'assemblage d'un nombre limité de caissons de tailles et de caractéristiques différentes, est en mesure de procurer une grande précision d'assemblage, en particulier avant passage dans la cadreuse.

C'est dans le cadre d'une première démarche inventive qu'il a été pris en compte que le passage, nécessairement, d'un caisson de meuble préassemblé dans une cadreuse de pressage, permettait d'envisager que le pré assemblage des parois composant ce caisson pouvait intervenir avec une moindre précision et, donc, en acceptant des tolérances plus importantes, de l'ordre du millimètre.

C'est en quelque sorte en allant à l'encontre d'un préjugé selon lequel une grande précision est nécessaire pour l'assemblage des parois d'un caisson de meubles, qu'il a été imaginé la solution selon invention pour répondre aux contraintes de l'état la technique.

Cette solution selon l'invention met en œuvre un bras préhenseur de robot aux caractéristiques on ne peut plus standard pour, en particulier, saisir, depuis une zone alimentation, un côté supérieur dans le but de le positionner et l'emboîter sur les parois intermédiaires préalablement emboîtées sur un côté inférieur, ceci avec une précision d'assemblage que peut procurer un tel bras manipulateur de repos.

C'est dans le cadre d'une démarche inventive complémentaire qu'on a pensé produire, au travers de ce bras préhenseur de robot, une pression d'assemblage du côté supérieur sur les parois intermédiaires qui soit le reflet de la résistance à l'assemblage et à l'emboîtement que peuvent procurer ces parois intermédiaires.

En somme, on a imaginé que cette pression exercée par le bras préhenseur de robot sur le côté supérieur soit en le pendant de la résultante des forces de résistance à l'emboîtement procurées par les parois intermédiaires.

Là encore, dans une démarche inventive on a pris en compte que cette résistance à l'emboîtement d'un côté supérieur d'un caisson de meuble ne s'applique pas uniformément sur cette paroi, mais en fonction du nombre et du positionnement des parois intermédiaires et, bien sûr, du positionnement et du nombre des tourillons dont celles-ci sont équipés et qui sont à insérer dans des perçages prévus à cet effet au niveau du côté supérieur.

À titre d'exemple, une pression exercée de manière centrale sur le côté supérieur sous laquelle s'étendent des parois intermédiaires, non nécessairement sous les extrémités de ce côté supérieur, mais de manière asymétrique, entraîne un risque important d'un emboîtement partiel de ce côté supérieur sur ces parois intermédiaires.

Ainsi, l'invention concerne un procédé d'assemblage de caisson de meuble au moyen d'une unité d'assemblage, caisson comportant un côté inférieur, au moins deux parois intermédiaires et un côté supérieur, comprenant des moyens d'emboitement réciproques, procédé comprenant les étapes suivantes :
- On amène, par des moyens d'alimentation adaptés, le côté inférieur sur un plan de montage, en appui contre des butées d'un plan repère de positionnement ;
- On emboite dans une disposition verticale et au travers des moyens d'emboitement réciproque, selon le cas manuellement et/ou à l'aide de moyens de préhension à gestion automatisée, lesdites parois intermédiaires sur le côté inférieur ;
- On assure le maintien dans une disposition verticale des dites parois intermédiaires ;
- On prélève, depuis une zone d'alimentation, un côté supérieur, au moyen d'un bras préhenseur de robot ;
- On positionne au moyen de ce bras préhenseur de robot le côté supérieur au-dessus des parois intermédiaires, notamment en fonction des données de positionnement du côté inférieur dans le plan repère de positionnement ;
- On emboite au travers des moyens d'emboitement réciproque le côté supérieur sur les parois intermédiaires en exerçant sur ledit côté supérieur une pression d'emboitement sensiblement dans l'alignement de la résultante des forces de résistance à l'emboitement procurées par lesdites moyens d'emboitement réciproque.

Selon une particularité de l'invention, dans une étape préliminaire, on adresse au bras préhenseur de robot des données prédéfinies relatives à la résultante des forces de résistance à l'emboitement du côté supérieur sur les parois intermédiaires correspondant audit caisson de meuble à assembler.

Selon encore une autre particularité de l'invention, dans une étape préliminaire on sélectionne, dans une base de donnée dans laquelle sont préenregistrées les données relatives aux différents caissons susceptibles d'être assemblés par l'unité d'assemblage, le caisson de meuble à assembler et on adresse au bras préhenseur de robot les données prédéfinies relatives à la résultante des forces de résistance à l'emboitement du côté supérieur sur les parois intermédiaires correspondant audit caisson de meuble à assembler.

Selon l'invention, l'unité d'assemblage pour la mise en œuvre du procédé comporte des moyens d'alimentation d'un côté inférieur, un plan de montage, préférentiellement horizontal, pourvu de butées d'un plan repère de positionnement, des moyens de maintien en position verticale de parois intermédiaires emboitées sur le côté inférieur, une zone d'alimentation en côté supérieur et un bras préhenseur de robot pour prélever un côté supérieur dans ladite zone d'alimentation, le positionner et l'emboiter au-dessus des parois intermédiaires, des moyens d'enregistrement et d'adressage à une unité de gestion du bras préhenseur de robot de données prédéfinies relatives à la résultante des forces de résistance à l'emboitement du côté supérieur sur les parois intermédiaires correspondant à un caisson de meuble à assembler.

Les avantages découlant de la présente invention consistent en ce qu'il est très aisé de mettre en œuvre, en un temps réduit, une nouvelle unité d'assemblage de caissons de meubles susceptibles de répondre aux spécificités de ces derniers, sans compter qu'une telle unité d'assemblage conçu selon l'invention présente une grande souplesse d'adaptation pour répondre très vite à des besoins d'assemblage de caissons de meubles aux caractéristiques et dimensions différentes.

D'autres buts et avantages de la présente invention apparaîtront cours de la description qui va suivre se rapportant à des exemples de réalisation donnés à titre indicatif et non limitatif.

La compréhension de cette description sera facilitée en se référant au dessin en annexe dans lesquelles :
[Fig.1] représente de manière schématisée, en perspective et sous forme d'une vue éclatée un exemple de caisson de meuble du type susceptible d'être assemblé selon le procédé et l'unité d'assemblage conforme invention.
[Fig.2] est une représentation schématisée et vue de dessus d'une unité d'assemblage selon l'invention ;
[Fig.3] est une représentation schématisée et en élévation de cette une unité d'assemblage.

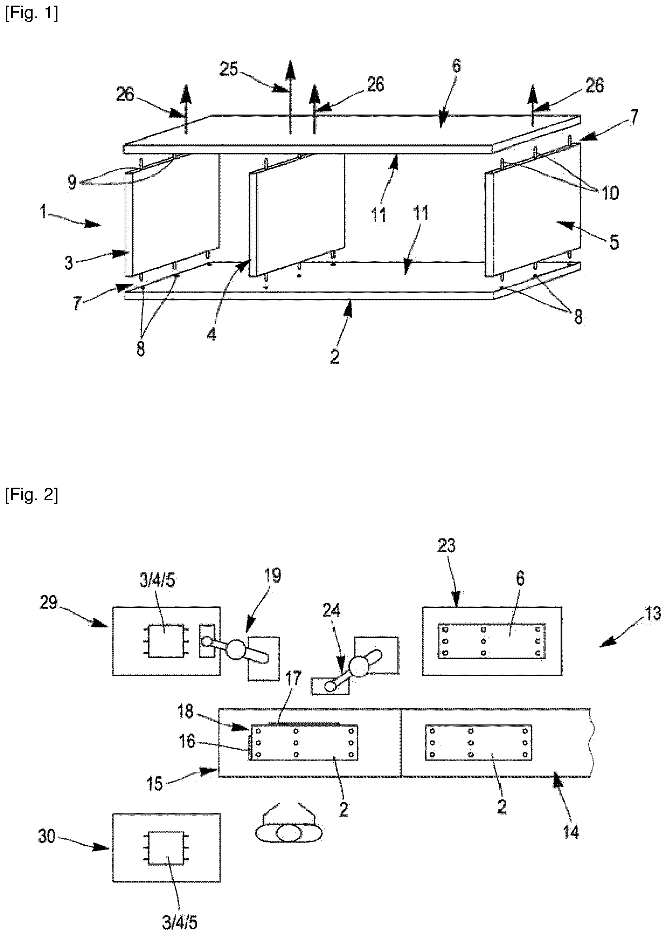

La présente invention concerne le domaine de l'assemblage de caissons de meubles dont un exemple est illustré à titre indicatif dans la figure 1. Ce caisson de meuble 1 est représenté, ici, avec l'ensemble de ses composants dans une position près à être assemblés.

Ainsi, un tel caisson de meuble 1 comporte un côté inférieur 2 disposée dans un plan sensiblement horizontal et sur laquelle sont prévus aptes à être emboîtées au moins deux parois intermédiaires 3, 4, 5 (dans l'exemple elles sont au nombre de trois). Ce caisson de meuble 1 comporte encore un côté supérieur 6 prévue pour venir s'emboîter sur les parois intermédiaires 3, 4, 5.

On comprend bien que dans l'usage du meuble les côtés inférieurs 2 et les côtés supérieurs 6 peuvent constituer, selon le cas, les parois inférieure et supérieure du meuble ou encore les parois latérales de ce dernier.

Ces différentes parois 2, 3, 4, 5, 6 comportent des moyens d'emboîtement réciproque 7, qui peuvent emprunter différentes formes de réalisation. De manière fréquentes, ces moyens d'emboîtement réciproque 7 se présentent sous forme de perçages 8, 9 ménagés de manière adéquate au niveau de ces parois 2 à 6, perçages 8, 9 prévus pour accueillir des tourillons d'assemblage 10.

Il est d'ores et déjà connus dans la conception de ces parois 2 à 6 composants le caisson de meuble 1 de réaliser, sur des postes d'usinage adaptés ces différents perçages 8, 9 sur l'une et/ou l'autre face 11 de ces parois 2 à 6 et/ou encore sur les chants d'extrémité 12, tout comme il est connu d'équiper en amont l'une et/ou l'autre de ces parois 3, 4, 5 de tourillons d'assemblage 10 par insertion partielle dans leur perçages 9 préalablement encollés.

Sur de telles lignes de fabrication, ces parois 2 à 6 destinées à composer un caisson de meuble 1 peuvent également être équipées d'accessoires, par exemple de coulisses de tiroir, de supports d'articulation de porte ou autre, qui n'ont pas été représentés dans les dessins, n'ayant pas d'incidence sur l'objet de la présente invention.

Pour en revenir à l'exemple illustré dans la figure 1, les parois intermédiaires 3 à 5 ont été représentées prééquipées de tourillons d'assemblage 10 engagés partiellement dans des perçages 9 sur les chants d'extrémité supérieure et inférieure 12, ces tourillons d'assemblage 10 étant destinés à venir s'insérer dans des perçages 8 ménagés en conséquence au niveau des faces 11 du côté inférieur 2 et du côté supérieur 6. Évidemment, il est possible d'imaginer équiper ces derniers des tourillons d'assemblage prévu pour être s'emboîtés dans des perçages 9 sur les chants d'extrémité 12 des parois intermédiaires 3, 4 et 5, l'invention n'étant nullement tenue à l'une ou l'autre de ces solutions.

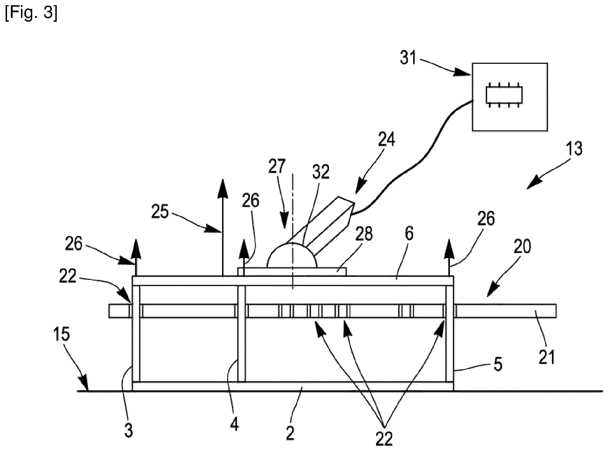

En se rapportant, à présent, aux figures 2 et 3, il est décrit ci-après le procédé d'assemblage de caissons de meubles selon l'invention ainsi que l'unité d'assemblage 13 pour la mise en œuvre de ce procédé.

Selon ce procédé conforme à l'invention, on amène, par des moyens d'alimentation adaptée 14, le côté inférieur 2 sur un plan de montage 15, préférentiellement horizontal, en appui contre des butées 16, 17 d'un plan repère de positionnement 18.

Grâce à ce dernier et les caractéristiques considérées connues du côté inférieur 2, il est connu l'implantation prévue des parois intermédiaires 3 à 5.

Aussi, dans l'étape suivante, on emboîte, dans une disposition verticale et au travers des moyens d'emboîtement réciproque 7, selon le cas manuellement et/ou à l'aide de moyens de préhension à gestion automatisée 19, lesdites parois intermédiaires 3 à 5 sur le côté inférieur 2.

Comme indiqué précédemment, ces parois intermédiaires 3 à 5 peuvent être amenées et emboîtées sur le côté inférieur 2, selon le cas manuellement ou de manière automatisée, voire en faisant appel aux deux solutions.

Ces parois intermédiaires 3 à 5, une fois positionnées sur le côté inférieur 2 sont maintenues dans leur position verticale emboîtée par des moyens 20 adaptés. Ceux-ci peuvent emprunter différentes formes de réalisation. Ils sont préférentiellement implantés sur l'unité d'assemblage 13 en corrélation avec le plan repère de positionnement 18 dans lequel est positionné le côté inférieur 2.

Dans un exemple de réalisation, ces moyens de maintien 20 sont définis par une lisse horizontale 21 s'étendant au-dessus du plan repère de positionnement 18 et portant un ou plusieurs taquets 22 de maintien vertical de parois intermédiaires 3 à 5. Ce ou ces taquets 22, par exemple sous forme de fourche entre lesquelles peut être insérée une paroi intermédiaire, sont montés, selon le cas, fixe ou mobile le long de la lisse 21.

De manière préférentielle, sur cette dernière est montée une pluralité de taquets 22 fixes pour le maintien de parois intermédiaires correspondant à une gamme déterminée de caissons de meuble susceptibles d'être assemblés sur l'unité d'assemblage 13.

Avantageusement, ces moyens de maintien 20 sont au moins mobiles verticalement de manière apte à s'adapter en position à la hauteur du caisson 1 à assembler, plus particulièrement à la hauteur des parois intermédiaires 3 à 5 à maintenir.

Dans une étape suivante du procédé selon l'invention, on prélève, depuis une zone d'alimentation 23, le côté supérieur 6 au moyen d'un bras préhenseur de robot 24. Puis on positionne au moyen de ce bras préhenseur de robot 24 le côté supérieur 6 au-dessus des parois intermédiaires 3 à 5, préférentiellement en fonction des données du plan repère de positionnement 18 dans lequel est positionnée le côté inférieur 2.

Selon une étape particulière de l'invention, on emboîte, au travers des moyens d'emboîtement réciproque 7, le côté supérieur 6 sur les parois intermédiaires 3 à 5 en exerçant, sur ledit côté supérieur 6, au moyen du bras préhenseur de robot 24, une pression d'emboîtement sensiblement dans l'alignement de la résultante 25 des forces de résistance à l'emboîtement 26 procurées par lesdits moyens d'emboîtement réciproque 7, entre lesdites parois intermédiaires 3 à 5 et le côté supérieur 6.

On comprend, notamment au travers des figures 1 et 3 que les forces de résistance à l'emboîtement 26 s'exercent sur le côté supérieur 6 au droit des parois intermédiaires 3 à 5 et sont donc fonctions du positionnement de ces dernières sous ce côté supérieur 6. Ces forces de résistance à l'emboîtement 26 peuvent également dépendre de la nature et du nombre de moyens d'emboîtement réciproque 7 entre ce côté supérieur 6 est chacune des parois intermédiaires 3 à 5.

Avantageusement, cette résultante 25 des forces de résistance à l'emboîtement 26 est déterminée en amont, en fonction des caractéristiques du caisson de meuble 1 à assembler. En somme, les caractéristiques de cette résultante 25, en l'occurrence son intensité et/ou son positionnement sur le côté supérieur 6, notamment par rapport au plan repère de positionnement 18, correspondent à des données prédéfinies. Elles sont transmises à l'unité de gestion 32 du fonctionnement du bras préhenseur de robot 24 pour l'application de la pression d'emboîtement sur le côté supérieur 6, lors de l'emboîtement de cette dernière sur les parois intermédiaires 3 à 5.

Ainsi, dans une étape préliminaire du procédé selon de l'invention, on adresse avantageusement au bras préhenseur de robot 24 ces données prédéfinies relatives à la résultante 25 des forces de résistance à l'emboitement 26 du côté supérieur 6 sur les parois intermédiaires 3 à 5, données correspondant au caisson de meuble 1 à assembler.

Etant donné qu'une variété de caissons de meuble 1, se distinguant par leurs caractéristiques et ou dimensions, est susceptible d'être assemblée sur unité d'assemblage 13, pour l'assemblage de chaque type de caisson de meuble 1 il est adressé au bras préhenseur de robot 24 les données adéquates pour exercer sur le côté supérieur 6 une pression qui soit en corrélation avec cette résultante 25 des forces de résistance à l'emboîtement 26 correspondant au caisson de meuble 1 en cours d'assemblage.

Si ces données peuvent être adressées par un opérateur au bras préhenseur de robot 24, l'unité d'assemblage 13 comporte encore avantageusement des moyens d'enregistrement et d'adressage 31 conçus pour l'enregistrement des données relatives aux caissons susceptibles d'être assemblés sur cette unité 13, données concernant notamment la résultante 25 des forces de résistance à l'emboîtement 26 correspondant à plusieurs caissons 1. Ces moyens 31 sont encore conçus pour adresser à l'unité de gestion 32 du bras préhenseur de robot 24 les données nécessaires pour l'exécution de la tâche qui lui est attribuée, conformément à l'invention.

De manière avantageuse, le bras préhenseur de robot 24 comporte à son extrémité de préhension 27 un plateau de préhension et de pressage 28 conçu apte à saisir un côté supérieur 6 au niveau de la zone d'alimentation 23. A titre d'exemple, ce plateau 28 peut être pourvu de moyens d'aspiration pour saisir ce côté supérieur 6.

Selon l'invention, encore, ce plateau de préhension et de pressage 28 du bras préhenseur de robot 24, défini des moyens de répartition de pression d'assemblage sur le côté supérieur 6 en fonction des données adressés relatives à la résultante 25 des forces de résistance à l'emboîtement 26 correspondant au caisson de meuble 1 à assembler.

Selon une variante possible de l'invention, on prélève depuis la zone d'alimentation 23 le côté supérieur 6 au moyen du bras préhenseur de robot 24 en fonction des données transmises à l'unité de gestion 32 de ce dernier et relatives à la résultante 25 des forces de résistance à l'emboîtement 26 correspondant au caisson de meuble 1 à assembler.

En somme, selon cette variante, on assure la préhension de ce côté supérieur 6 dans une zone au niveau de laquelle viendra s'exercer la résultante 25 des forces de résistance à l'emboîtement 26.

Selon encore une autre particularité de l'invention, dans une étape préliminaire, on sélectionne, dans une base de données dans laquelle sont préenregistrées les données relatives aux différents caissons susceptibles d'être assemblés par l'unité d'assemblage 13, le caisson de meuble 1 à assembler et on adresse les données prédéfinies relatives à la résultante 25 des forces de résistance à l'emboitement 26 du côté supérieur 6 sur les parois intermédiaires 3 à 5 correspondant audit caisson de meuble 1 à assembler au bras préhenseur de robot 24, plus particulièrement à l'unité de gestion 32 de fonctionnement de ce dernier.

Selon l'invention, l'unité d'assemblage 13 comporte en amont des moyens d'identification du caisson de meuble 1 à assembler. Au travers de ces moyens d'identification, il peut être déterminé par un opérateur les données à adresser à l'unité de gestion 32 du bras préhenseur de robot 24, données relatives à la résultante 25 des forces de résistance à l'emboîtement 26 du côté supérieur 6 sur les parois intermédiaires 3 à 5 en rapport audit caisson de meuble 1 à assembler.

Dans un mode de réalisation préféré, ces moyens d'identification du caisson de meuble 1 à assembler sont conçus pour sélectionner dans la base de données préenregistrée ces données prédéfinies relatives à la résultante 25 des forces de résistance à l'emboîtement 26 du côté supérieur 6 sur les parois intermédiaires 3 à 5 correspondant audit caisson de meuble 1 et les adresser au bras préhenseur de robot 24, plus particulièrement à l'unité de gestion 32 de ce dernier.

Bien évidemment, l'unité d'assemblage 13 peut encore être équipée de tout un ensemble de moyens complémentaires pour assembler des caissons de meuble conformément au procédé selon l'invention.

En particulier, dans la mesure où le côté inférieur 2 et le côté supérieur 6 subissent, en amont de cette unité d'assemblage 13, une pluralité d'opérations d'usinage et d'équipement sur leur face 11 interne au caisson de meuble 1, il peut s'avérer nécessaire de prévoir une station de retournement, en particulier du côté supérieur 6 à hauteur de la zone d'alimentation 23 de sorte que le bras préhenseur de robot 24 puisse saisir ce côté supérieur 6, face 11 orientée vers le bas, pour la présenter au-dessus des parois intermédiaires 3 à 5.

De même, cette unité d'assemblage 13 peut être pourvue d'une ou plusieurs zones d'alimentation 29, 30 de parois intermédiaires 3 à 5 dont sont prélevés ces dernières, selon le cas, manuellement ou par l'intermédiaire de moyens de préhension à gestion automatisée 19.

L'unité d'assemblage 13 est également pourvue, préférentiellement, de différents moyens de contrôle et/ou de détection :
- du positionnement du côté inférieur 2 dans le plan repère de positionnement 18;
- des parois intermédiaires 3 à 5 conformément au caisson de meuble 1 à assembler
- de l'emboîtement convenable du côté supérieur 6 sur les parois intermédiaires 3 à 5, par exemple au travers d'un contrôle de cote du caisson de meuble 1 en fin de cycle d'assemblage et/ou par des moyens de détection directement associées au bras préhenseur de robot 24 et/ou du plateau de préhension et de pressage 28 ;
- de la présence d'un opérateur dans le champ d'intervention des différents actionneurs que comporte cette unité d'assemblage 13, tels que les moyens de préhension à gestion automatisée 19 ou le bras préhenseur de robot 24 ;
étant entendu que la présente invention n'est nullement limitée à cette énumération.

Une telle unité d'assemblage 13 selon l'invention peut s'inscrire dans une ligne de fabrication de meubles comportant, en amont, différents postes d'usinage et d'assemblage pour la conception et l'équipement des différentes parois 2, 3, 4, 5, 6 et, en aval, une cadreuse de pressage pour la conformation des caissons de meuble 1 en sortie de cette unité d'assemblage 13.

Les avantages découlant de l'invention consistent en ce qu'en étend en mesure de mettre en œuvre des moyens universels, tels que des bras préhenseurs de robot, il est possible d'envisager l'automatisation de l'assemblage de tous types de caisson de meuble, même en série réduite, sans faire appel, nécessairement, à une machine de conception spéciale.

Surtout, un tel procédé et une telle unité d'assemblage 13 sont susceptibles d'être adaptés très aisément à toutes les contraintes d'assemblage de caissons de meuble, quel que soit les caractéristiques spécifiques et de dimensions de ces derniers. :

## Revendications

1. Procédé d'assemblage de caisson de meuble au moyen d'une unité d'assemblage (13), caisson (1) comportant un côté inférieur (2), au moins deux parois intermédiaires (3, 4, 5) et un côté supérieur (6), comprenant des moyens d'emboitement réciproques (7), procédé comprenant les étapes suivantes :
• On amène, par des moyens d'alimentation adaptés (14), le côté inférieur (2) sur un plan de montage (15), en appui contre des butées (16, 17) d'un plan repère de positionnement (18) ;
• On emboite dans une disposition verticale et au travers des moyens d'emboitement réciproque (7), selon le cas, manuellement et/ou à l'aide de moyens de préhension à gestion automatisée (19), lesdites parois intermédiaires (3, 4, 5) sur le côté inférieur (2) ;
• On assure le maintien dans une disposition verticale des dites parois intermédiaires (3, 4, 5) ;
• On prélève, depuis une zone d'alimentation (23), un côté supérieur (6), au moyen d'un bras préhenseur de robot (24) ;
• On positionne au moyen de ce bras préhenseur de robot (24) le côté supérieur (6) au-dessus des parois intermédiaires (3, 4, 5), notamment en fonction des données du plan repère de positionnement (18) ;
• On emboite au travers des moyens d'emboitement réciproque (7) le côté supérieur (6) sur les parois intermédiaires (3, 4, 5) en exerçant sur ledit côté supérieur (6) une pression d'emboitement sensiblement dans l'alignement de la résultante (25) des forces de résistance à l'emboitement (26) procurées par lesdites moyens d'emboitement réciproque (7).

2. Procédé selon la revendication 1 **caractérisé en ce que** dans une étape préliminaire, on adresse au bras préhenseur de robot (24) des données prédéfinies relatives à la résultante (25) des forces de résistance à l'emboitement (26) du côté supérieur (6) sur les parois intermédiaires (3, 4, 5) correspondant audit caisson (1) de meuble à assembler.

3. Procédé selon la revendication 1 ou 2 **caractérisé en ce que**, dans une étape préliminaire on sélectionne, dans une base de données dans laquelle sont préenregistrées les données relatives aux différents caissons (1) susceptibles d'être assemblés par l'unité d'assemblage (13), le caisson de meuble (1) à assembler et on adresse au bras préhenseur de robot (24) les données prédéfinies relatives à la résultante (25) des forces de résistance à l'emboitement (26) du côté supérieur (6) sur les parois intermédiaires (3, 4, 5) correspondant audit caisson de meuble (1) à assembler.

4. Procédé selon l'une des revendications 1 à 3, **caractérisé en ce qu'**après assemblage du caisson de meuble (1) il est conformé dans une cadreuse de pressage.

5. Unité d'assemblage pour la mise en œuvre du procédé selon l'une quelconque des revendications précédentes, **caractérisée en ce qu'**elle comporte des moyens d'alimentation (14) d'un côté inférieur (2), un plan de montage (15), préférentiellement horizontal, pourvu de butées (16, 17) d'un plan repère de positionnement (18), des moyens de maintien (20) en position verticale de parois intermédiaires (3, 4, 5) emboitées sur le côté inférieur (2), une zone d'alimentation (23) en côté supérieur (6) et un bras préhenseur de robot (24) pour prélever un côté supérieur (6) dans ladite zone d'alimentation (23), le positionner et l'emboiter au-dessus des parois intermédiaires (3, 4, 5), des moyens d'enregistrement et d'adressage (31) à une unité de gestion (32) du bras préhenseur de robot (24) de données prédéfinies relatives à la résultante (25) des forces de résistance à l'emboitement (26) du côté supérieur (6) sur les parois intermédiaires (3, 4, 5) correspondant à un caisson de meuble (1) à assembler.

6. Unité d'assemblage selon la revendication 5, **caractérisée en ce que** les moyens de maintien (20) sont définis par une lisse horizontale (21) s'étendant au-dessus du plan repère de positionnement (18) et portant un ou plusieurs taquets de maintien vertical (22) de parois intermédiaires (3, 4, 5), ce ou ces taquets (22) sont montés, selon le cas, fixe ou mobile le long de la lisse (21).

7. Unité d'assemblage selon la revendication 5 ou 6, **caractérisée en ce que** les moyens de maintien (20) sont au moins mobiles verticalement de manière apte à s'adapter en position à la hauteur des parois intermédiaires (3, 4, 5) à maintenir.

8. Unité d'assemblage selon l'une des revendications 5 à 7, **caractérisée en ce que** le bras préhenseur de robot (24) comporte à une extrémité de préhension (27) un plateau de préhension et de pressage (28) définissant des moyens de répartition de pression d'assemblage.

9. Unité d'assemblage selon l'une quelconque des revendications 5 à 8, **caractérisée en ce que** l'unité d'assemblage (13) comporte en amont des moyens d'identification d'un caisson de meuble (1) à assembler pour déterminer les données prédéfinies relatives à la résultante (25) des forces de résistance à l'emboîtement (26) du côté supérieur (6) sur les parois intermédiaires (3, 4, 5) correspondant à un caisson de meuble (1) à assembler et les adresser à l'unité de gestion (32) du bras préhenseur de robot (24).

10. Unité d'assemblage selon l'une quelconque des revendications 5 à 9, **caractérisée en ce que** ces moyens d'identification du caisson de meuble (1) à assembler sont conçus pour sélectionner dans une base de données préenregistrée dans les moyens d'enregistrement et d'adressage (31), les données prédéfinies relatives à la résultante (25) des forces de résistance à l'emboîtement (26) du côté supérieur (6) sur les parois intermédiaires (3 à 5) correspondant audit caisson de meuble (1) et les adresser à l'unité de gestion (32) du bras préhenseur de robot (24).

11. Unité d'assemblage selon l'une quelconque des revendications 5 à 10, **caractérisée en ce qu'**elle comporte une ou plusieurs zones d'alimentation (29, 30) de parois intermédiaires (3, 4, 5).

12. Unité d'assemblage selon la revendication 11, **caractérisée en ce qu'**elle comporte des moyens de préhension à gestion automatisée (19) conçus pour prélever des parois intermédiaires (3, 4, 5) depuis une zone d'alimentation (29 ; 30) et les emboiter sur un côté inférieur (2) dans le plan repère de positionnement (18).

13. Unité d'assemblage selon l'une quelconque des revendications 5 à 12, **caractérisée en ce qu'**elle comporte une station de retournement du côté supérieur (6) à hauteur de la zone d'alimentation (23).

14. Unité d'assemblage selon l'une quelconque des revendications 5 à 13, **caractérisée en ce qu'**elle est pourvue de moyens de contrôle et/ou de détection :
• du positionnement du côté inférieur (2) dans le plan repère de positionnement (18) ;
• des parois intermédiaires (3, 4, 5) conformément au caisson de meuble (1) à assembler
• de l'emboîtement convenable du côté supérieur (6) sur les parois intermédiaires (3, 4, 5), ;
• de la présence d'un opérateur dans le champ d'intervention des différents actionneurs (19 ; 24). 1
